# EUROPEAN PATENT SPECIFICATION

(11) **EP 2 643 170 B1**
(45) Date of publication and mention of the grant of the patent: **04.01.2017**
(21) Application number: 11797135.8
(22) Date of filing: 14.11.2011
(51) Int. Cl.: B60C 9/22, D02G 3/48

(54) **METHOD OF INCREASING PERFORMANCE AND COMFORT OF A TYRE FOR VEHICLE WHEELS AND TYRE FOR VEHICLE WHEELS**
VERFAHREN ZUR ERHÖHUNG DER LEISTUNG UND DES KOMFORTS EINES REIFENS FÜR FAHRZEUGRÄDER UND REIFEN FÜR FAHRZEUGRÄDER
PROCÉDÉ PERMETTANT D'AUGMENTER LA PERFORMANCE ET LE CONFORT D'UN PNEU POUR ROUES DE VÉHICULE, ET PNEU POUR ROUES DE VÉHICULE

(30) Priority: 22.11.2010 IT MI20102151; 20.01.2011 US 201161434587 P
(43) Date of publication of application: 02.10.2013
(73) Proprietor: Pirelli Tyre S.p.A., 20126 Milano (IT)
(72) Inventor: RAMPANA, Barbara, I-20126 Milano (IT); TIRELLI, Diego Maria, I-20099 Sesto San Giovanni (MILANO) (IT); CAPPUCCIO, Giulio, I-20126 Milano (IT); ROWE, Stephen, I-20126 Milano (IT)
(74) Representative: Vittorangeli, Lucia
(86) International application number: PCT/IB2011/055068
(87) International publication number: WO 2012/069955

(56) References cited:
- WO-A1-80/00069
- US-A1- 2007 181 238

## Description

### FIELD OF THE INVENTION

The present invention relates to a method of increasing performance and comfort of a tyre for vehicle wheels and to a tyre for vehicle wheels.

A tyre for vehicle wheels generally comprises a carcass structure associated with a belt structure. Disposed at a radially external position to the belt structure is a tread band.

In particular the present invention relates to tyres of the HP (High Performance) or UHP (Ultra High Performance) type. These types of tyres equip cars capable of offering high drive performances.

Known tyres intended for the above specified use are equipped with a belt structure provided with a radially external reinforcing layer comprising textile nylon cords disposed at a substantially zero angle relative to a circumferential direction of the tyre and covered with elastomeric material. Examples of types of these tyres are disclosed in documents EP319588 and US4483381.

The above described belt structures using conventional materials however have some drawbacks. From a structural point of view, for instance, when the tyres are submitted to high speeds (higher than 200 km/h), particularly strong centrifugal forces are generated at the tread. These centrifugal forces cause radial expansion of the tread with lifting of the latter (lifting phenomenon) that, if not conveniently controlled and limited, can damage the tyre, drastically reducing the performance and duration of same (through irregular lifting of the belts until leading them to detachment, for example) and adversely affecting the vehicle's control devices (for instance, the antilocking braking system, ABS, and the electronic stability program, ESP).

From a structural point of view, these drawbacks appear when the speed increases, through generation of vibration and greater noise.

In addition, tyres having a 0° layer of the aforesaid textile type can be subjected to the so-called "flatspotting" phenomenon consisting in a modification of the geometry of the tyre structure at the footprint area following a prolonged stop of the vehicle after the latter has been running for a stretch long enough to cause increase in the tyre temperature. At the moment the vehicle stops, and the tyre becomes cold under load until reaching the room temperature, the reinforcing elements of the tyre at the footprint area cool under conditions of less stress than the other portions, which will lead to differences in the deformation of these elements and generation of localised flatting of the rolling surface of the tyre. When the vehicle is set in motion again, this localised flattening results in a jerk of the vehicle perceptible by the driver at each wheel revolution, that gradually disappears as the tyre becomes warm and all the volume elements take the same degree of deformation again. To the aforesaid modification of the tyre geometry also contributes said 0° layer due to modification of the viscoelastic properties and the geometry of the synthetic fibre conventionally used in said 0° layer of a car tyre.

To obviate the above phenomena, different tyre structures have been proposed over time.

Document EP 0571204 describes a belt structure including a conventional polyamide-reinforced crown layer having superposed layers disposed circumferentially in the vicinity of the tyre shoulders provided with reinforcing cords made of a hybrid polyaramide/polyamide material.

Document WO03008207 in the name of the same Applicant discloses a reinforcing layer radially external to the belt layers having reinforcing elements that are substantially parallel relative to each other and to the equatorial plane. The reinforcing elements of the 0° layer comprise individual metal wires preformed according to a given preforming ratio, which have a high modulus of elasticity and an important elongation to low loads.

Document US 2009/0139626 discloses a radial tyre provided with a carcass layer consisting of a hybrid cord obtained by imparting a first twist to a single yarn of nylon 46 and two aramide yarns and subsequently twisting the three yarns together while simultaneously imparting a second twist to the three yarns in the opposite way relative to the direction of the first twist imparted to these three yarns.

Documents EP412928, EP2065223 describe hybrid structures comprising aramidic fibres (aromatic amides). Document EP335588 discloses a radially external belt layer obtained by a ply spirally wound in a circumferential direction with a 0 to 3 degree angle relative to the equatorial plane, provided with a hybrid cord formed by twisting a filament having a high modulus of elasticity together with a filament having a low modulus of elasticity.

Document US2007/181238 , which is considered to be the closest prior art, discloses a pneumatic tire having a tread, a carcass with belt plies disposed below the tread, and a cap ply layer between the tread and the belt plies of the carcass. The cap ply is a weft inserted warp knit fabric tape comprising an in-lay warp yarn set, a weft inserted yarn set, and a stitching yarn set. In one embodiment, the weft inserted yarns, in-lay warp yarns, and/or stitching yarns may be hybrid yarns. These hybrid yarns are made up of at least 2 fibers of different fiber material (for example, cotton and nylon). Some preferred hybrid yarns include an aramide fiber with a nylon fiber, an aramide fiber with a rayon fiber, and an aramide fiber with a polyester fiber.

### SUMMARY OF THE INVENTION

In recent years, the motor manufacturers have put on the market cars made following new concepts. In particular, as regards the SUV segment, there has been a passage from four wheel drive cars typically used for off-road vehicles and generally noisy and relatively stiff, to cars manufactured with greater care as intended for everyday use by demanding customers in terms of comfort, but also in terms of safety and performance. These cars have bigger sizes, greater power and weight and ask for tyres of bigger sizes. For these cars the customer's expectation is that of a car of the same noiselessness and comfort as a saloon car to be safely driven under any condition and enabling high performances comparable with those of a sports car.

The tyre of the HP (High Performance) or UHP (Ultra High Performance) type suitable for said car categories should be able to withstand maximum speeds of at least 190 km/h, preferably until at least 270 km/h. Examples of these tyres are those belonging to the speed classes "T", "U", "H", "V", "Z", "W".

The Applicant has found that nylon, typically used in the form of cords as the reinforcing element in manufacturing the radially outermost layer of the belt structure, shows a reduction in the modulus of elasticity when the temperature increases (i.e. it has a thermoplastic behaviour). This deformation remains in tyres for a more or less prolonged time even when the car is used again and the driver and passengers perceive the vibration generated by the cyclical contact of the flattened area of each wheel, referred to as "flat spot", with the roadway surface.

On the other hand, while use of filaments of high modulus, made of metal for example, or comprising aramidic fibres alone or in combination with other fibres of lower modulus for improving the tensile features of the reinforcing material of the belt structure, has been judged as advantageous to the aim of performance, the Applicant has found that structures thus made show worsening of the comfort perceived by the driver and the passengers, which makes these materials inappropriate for application in tyres intended for cars that mainly must be comfortable and at the same time must be able to allow the same performances as sports cars and to safely face driving under hard handling conditions on roadway surfaces requiring great effort and attention.

The Applicant has perceived that, as regards cars, high performance and comfort are somewhat opposite requirements that are typically tackled by tyres with different structures.

The Applicant has faced the problem of providing a tyre, in particular a tyre of big sizes as intended for relatively bulky and heavy cars, that is capable of ensuring high performances in terms of speed, roadholding and steering property and at the same time offers a high degree of ride comfort in terms of noisiness and vibrations, for example.

According to the present invention, it has been surprisingly found that, by making the belt structure with a 0° reinforcing layer provided with cords including cellulose fibres (rayon fibres, for example) and aliphatic polyamide fibres (nylon fibres, for example), it is possible both to increase the tyre performance and to obtain a high degree of comfort.

This result is unexpected if referred to the fact that two fibres, typically considered as having a low modulus of elasticity, such as rayon and nylon, when combined with each other in a cord and included in a 0° reinforcing layer, have been found to be of high performance both in terms of sports performance and in terms of perceived comfort if compared with reinforcing materials having a high modulus such as steel wires, aramidic fibres (aromatic polyamides) or carbon and glass fibres.

According to the Applicant's experience, the radially external belt layer must be able to ensure a sufficiently reduced radial deformation of the tyre at medium-high speeds and roadholding in particular on a bend, but at the same time it must be deformable enough to absorb unevenness and ensure high ride comfort.

In a first aspect, the present invention relates to a method of increasing performance and comfort in a tyre for vehicle wheels, according to claim 1.

Use of rayon in rubberised layers was generally considered as critical due to the humidity that this material tends to entrap in its own fibres, which gives rise to a reduction in its modulus of elasticity. In fact, typically, use of rayon in carcass building is contemplated only after this material has been previously treated by a suitable drying apparatus immediately before being rubberised for making the carcass ply.

On the contrary, the Applicant has surprisingly found that it is possible to use rayon in a cord in combination with nylon in a 0° reinforcing layer without being it necessary to carry out the drying treatment preceding rubberising of the reinforcing cords, without the occurrence of any decay both as regards the tyre production process and above all in terms of performance and comfort reached by the tyres themselves.

This fact is particularly advantageous because said apparatus for treatment of rayon to be introduced as a reinforcing element in rubberised elements, involve relatively huge investments.

In accordance with a second aspect, the present invention relates to a tyre for vehicle wheels, according to claim 9.

The present invention, in at least one of the above aspects, can further have one or more of the preferred features hereinafter described.

In a preferred embodiment, each of said cords is only made up of cellulose fibres and aliphatic polyamide fibres.

Preferably, the radially external reinforcing layer is assembled through winding up of a continuous elongated element comprising at least one continuous hybrid cord into a plurality of turns.

In accordance with an embodiment, the turns are axially adjacent to each other.

As a result, the thickness of the reinforcing layer is substantially the same as the thickness of the continuous elongated element.

In an alternative embodiment, the turns partly overlap each other in an axial direction.

Preferably, overlapping of the turns is carried out over half the width of the continuous elongated element. The thickness of the reinforcing layer is therefore greater than the thickness of the continuous elongated element.

Preferably, said continuous elongated element comprises a plurality of continuous parallel hybrid cords disposed in side by side relationship.

Preferably, said continuous elongated element comprises at least one hybrid cord consisting of a cellulose fibre (preferably rayon) yarn/aliphatic polyamide fibre (preferably nylon) yarn, and other textile cords.

The continuous elongated element is in the form of a ribbon or a strip-like element.

Preferably, said continuous elongated element comprises a number included between 5 and 15 of continuous parallel hybrid cords disposed in side by side relationship with, or adjacent to other textile cords.

Preferably, the starting modulus, evaluated through the load at specific 1% elongation (LASE 1% - load at specific elongation 1%) according to tests following the rules of the BISFA (Bureau International pour la Standardisation des Fibres Artificielles), of the cellulose fibres and the aliphatic polyamide fibres used for making the cords is lower than 20 [cN/tex], more preferably lower than or equal to 15 [cN/tex].

Preferably, the normalised ultimate tensile stress on the count (toughness) of the cellulose fibres and the aliphatic polyamide fibres used for making the cords is lower than 100 [cN/tex], more preferably equal to or lower than 90 [cN/tex].

The number of the cords in the strip-like element gives rise to the density of said cords in the reinforcing layer.

The yarn count or linear density can be expressed in dtex, i.e. mass expressed in grams of a 10000 m long thread or thread-like reinforcing element, or in deniers (den), i.e. mass expressed in grams of a 9000 m long thread.

Preferably, each of the cellulose-fibre yarns has a count included between about 1000 dtex and about 2800 dtex.

Preferably, each of the aliphatic-polyamide yarns has a count included between about 600 dtex and about 2400 dtex.

The hybrid cord count is the sum of the counts of the yarns forming it.

Preferably, each of said hybrid cords has a count included between about 1200 dtex and about 7000 dtex.

Still more preferably, the count of the cords is included between 2160 dtex and 3840 dtex.

The hybrid textile cords are further identified by the twisting (expressed in twists per meter) imparted to each of the individual yarns and by the twisting imparted to the cord formed by said yarns.

Preferably, the twisting imparted to each of the cellulose fibre yarns is included between about 150 twists/m and about 600 twists/m.

Preferably, the twisting imparted to each of the yarns of aliphatic polyamide fibre is included between about 50 twists/m and about 300 twists/m.

Preferably, the twisting imparted to each of the hybrid cords is included between about 100 twists/m and about 500 twists/m.

According to an embodiment, each of said hybrid cords comprises two nylon yarns and one rayon yarn.

According to an alternative embodiment, each of said hybrid cords comprises one nylon yarn and two rayon yarns.

Preferably, the density of the textile cords in the composite material is included between 50 cords/dm and 130 cords/dm, more preferably between 70 cords/dm and 110 cords/dm and is typically expressed using the identification letter F followed by the number of cords per centimetre.

The aliphatic polyamide is preferably nylon 6, nylon 66, nylon 46, and more preferably nylon 66.

Preferably, the rayon content in the hybrid cord is lower than 80%.

More preferably, the rayon content in the hybrid cord is included between about 25% and about 75%.

Preferably, the carcass structure comprises at least one carcass ply with textile cords.

Preferably, the belt structure comprises at least one radially internal layer including a plurality of reinforcing cords disposed in a crossed orientation relative to the circumferential extension direction of the tyre.

Preferably said tyre is a HP (High Performance) tyre or a UHP (Ultra High Performance) tyre for either a SUV (Sport Utility Vehicle) or a CUV (Crossover Utility Vehicle).

These cars typically have an engine displacement starting from 1800 cc, and preferably between 2000 cc and 6200 cc.

These cars have a mass exceeding 1400 kg and preferably between 1500 kg and 3000 kg.

These cars have a front body shape of a width starting from 170 cm and a height starting from 160 cm, preferably their width is included between about 180 cm and about 210 cm and their height is included between about 160 cm and about 200 cm.

Preferably said tyre belongs to the speed classes "T", "U", "H", "V", "Z", "W".

Typically these tyres are mounted on rims having fitting or seating sizes starting from 15 inches, preferably not exceeding 24 inches. Preferably, these tyres are mounted on rims having fitting sizes included between 16 and 22 inches.

Typically these tyres have a section width starting from 185 mm and preferably included between 195 mm and 325 mm.

Further features and advantages will become more apparent from the detailed description of a preferred but not exclusive embodiment of a method of increasing performance and comfort of a tyre for vehicle wheels, and of a tyre for vehicle wheels in accordance with the present invention.

### BRIEF DESCRIPTION OF THE DRAWINGS

This description will be set out hereinafter with reference to the accompanying drawings, given by way of non limiting example, in which:
- Fig. 1 diagrammatically shows a radial half-section of a tyre for car wheels according to the invention;
- Fig. 2a shows an enlarged portion of the tyre of Fig. 1;
- Fig. 2b shows the enlarged portion of Fig. 2a according to a variant of the tyre in Fig. 1;
- Fig. 3 is a perspective view of an elongated element designed to form the radially external reinforcing layer of the belt of the tyre seen in Fig. 1;
- Fig. 4 shows a hybrid yarn used in making the elongated element of Fig. 3;
- Figs. 5a, 5b, 6 show as many load/elongation graphs of comparative tensile tests between cords and rubberised strip-like elements;
- Fig. 7 is a graph showing the results of a comparative flat-spotting test carried out between a tyre according to the invention and a reference tyre.

### DETAILED DESCRIPTION OF PREFERRED EMBODIMENTS OF THE INVENTION

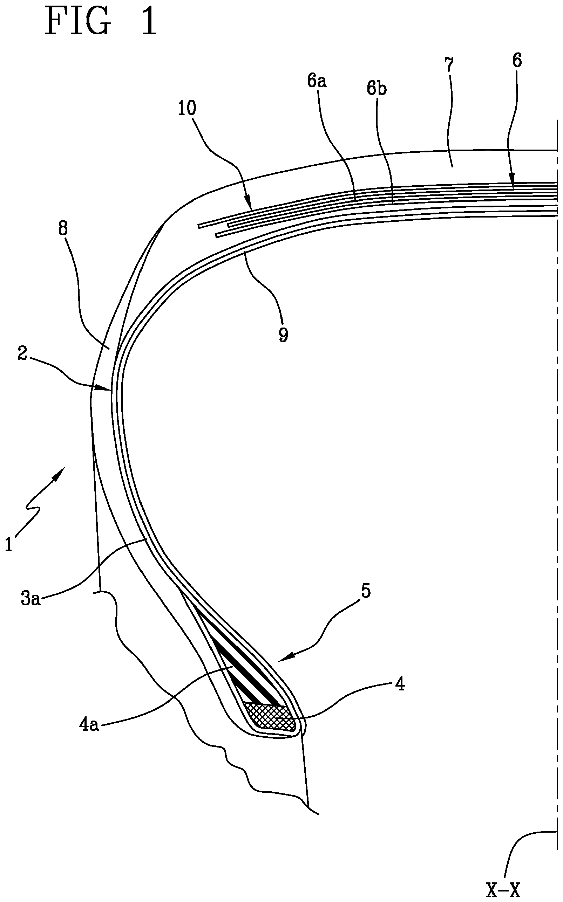

Identified by reference numeral 1 in Fig. 1 is a tyre for vehicle wheels generally comprising a carcass structure 2 including at least one carcass ply 3a having respectively opposite end flaps in engagement with respective annular anchoring structures 4, possibly associated with elastomeric fillers 4a, integrated into the regions 5 usually identified as "beads".

Associated with the carcass structure 2 is a belt structure 6 including one or more belt layers 6a, 6b put in radial superposed relationship with each other and with the carcass ply 3a, having typically metallic reinforcing cords. These reinforcing cords can have a crossed orientation relative to a circumferential extension direction of tyre 1. By "circumferential" direction it is intended a direction generally in the same rolling direction of the tyre, or at all events of little inclination relative to the tyre rolling direction.

A tread band 7 of elastomeric compound, like other semimanufactured constituents of tyre 1, is applied at a radially external position to the belt structure 6.

In addition, respective sidewalls 8 of elastomeric compound are applied at an axially external position to the side surfaces of the carcass structure 2, each extending from one of the side edges of the tread band 7 until close to the respective annular anchoring structure to the beads 5.

A radially internal surface of tyre 1 is further preferably fully coated with a layer of substantially airtight elastomeric material or so-called liner 9.

The belt structure 6 further comprises at least one reinforcing layer 10 radially external to the belt layers 6a, 6b. The radially external reinforcing layer 10 comprises hybrid textile cords 11 disposed at a substantially zero angle relative to the circumferential extension direction of the tyre and buried in the elastomeric material. Preferably, the hybrid textile cords 11 are disposed substantially parallel and in side by side relationship so as to form a plurality of turns. These turns are substantially oriented in the circumferential direction (typically at an angle between 0° and 5°), this direction being usually referred to as "zero degrees" with reference to its lying relative to the equatorial plane X-X of the tyre. By "equatorial plane" of the tyre it is intended a plane perpendicular to the tyre rotation axis dividing the tyre into two symmetrically identical halves.

Preferably, tyre 1 for cars is of the HP (High Performance) or UHP (Ultra High Performance) type, i.e. it is a tyre capable of withstanding maximum speeds of at least 190 km/h, until 270 km/h. Examples of these tyres are those belonging to classes "T", "U", "H", "V", "Z", "W". Preferably, tyre 1 for cars is of the type for luxury or high-class cars or dedicated to SUVs (Sports Utility Vehicles) and to Crossover SUVs or CUVs (Crossover Utility vehicles) combining masses and volumes typical of a station wagon with the performance of a sports car.

Building of tyre 1 as above described is carried out through assembly of respective semimanufactured products on a forming drum, not shown, by at least one assembling device.

Built and/or assembled on the forming drum are at least part of the components designed to form the carcass structure 2 of tyre 1. More particularly, the forming drum is adapted to first receive liner 9, if any, and subsequently the carcass ply 3a. Afterwards, devices not shown coaxially engage one of the annular anchoring structures 4 around each of the end flaps, position an outer sleeve including the belt structure 6 and tread band 7 at a coaxially centred position around the cylindrical carcass sleeve and shape the carcass sleeve into a toroidal configuration through radial expansion of the carcass ply 3a, so as to cause application thereof against a radially internal surface of the outer sleeve.

After building of the green tyre 1, a curing and moulding treatment is carried out which aims at determining the structural stabilisation of tyre 1 through cross-linking of the elastomeric compounds and at impressing the tread band 7 with a desired tread pattern and printing possible distinctive graphic marks at the sidewalls 8.

The radially external reinforcing layer 10 comprising the hybrid textile cords 11 is preferably made by winding a continuous elongated element 12 into turns around the belt layers 6a, 6b previously laid on a support, not shown. The continuous elongated element 12 is a single rubberised hybrid cord or a strip-like element including cords 11 disposed in mutual side by side relationship in the axial direction. Preferably, the number of hybrid cords 11 in a strip-like element is included between 5 and 15.

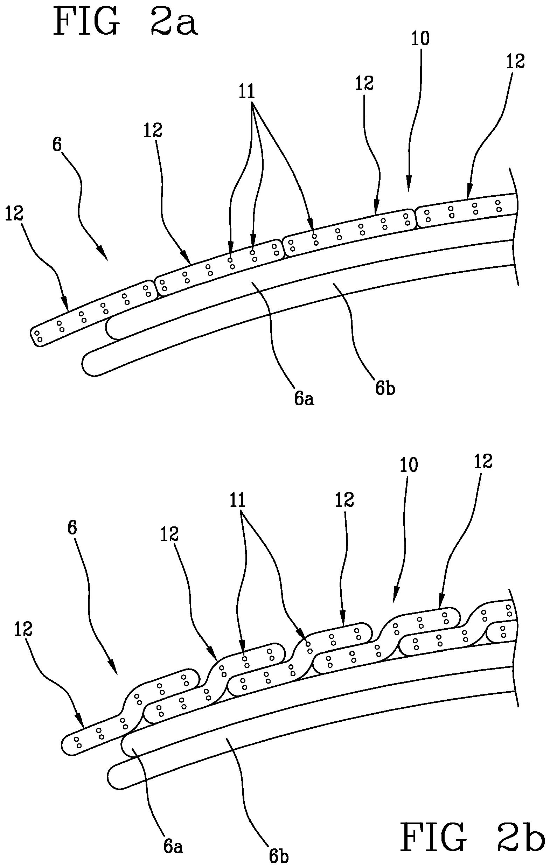

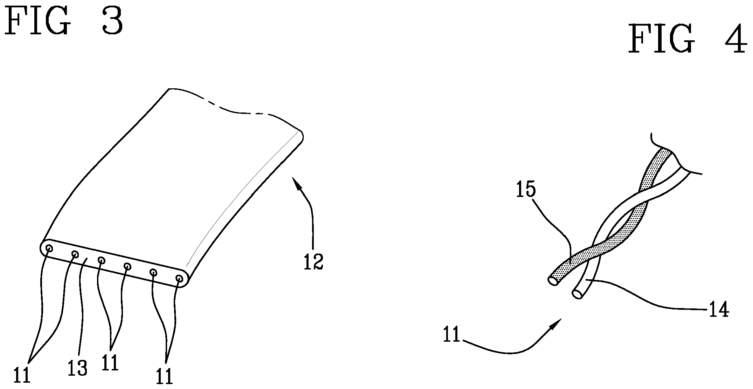

In the example shown in Figs. 2a, 2b and 3, the continuous elongated element 12 comprises six continuous hybrid textile cords 11 buried in the elastomeric material 13.

According to the embodiment in Fig. 2a, the turns of the strip-like element 12 are adjacent to each other at their longitudinal edges. According to the embodiment in Fig. 2b, the turns of the strip-like element 12 are partly overlapped along an axial direction of tyre 1.

Typically, the elastomeric material 13 comprises elastomeric polymers or additives such as fillers (carbon black, silica), curing agents (sulphur, for example), activators, accelerators, plasticizers, that are particularly suitable for tyre production.

Typically, the elastomeric material comprises a cross-linkable elastomeric composition including elastomeric polymers or copolymers with an unsaturated chain having a glass transition temperature (Tg) generally under 20°C, preferably within the range of 0°C to - 110°C. These polymers or copolymers can be of natural origin or can be obtained through solution polymerisation, emulsion polymerisation or gas-phase polymerisation of one or more conjugated diolefins, optionally mixed with at least one comonomer selected from monovinylarens and/or polar comonomers in an amount not exceeding 60% by weight. The conjugated diolefins generally contain 4 to 12, preferably 4 to 8 carbon atoms and can be selected, for example, from the group comprising: 1,3-butadiene, isoprene 2,3-dimethyl-1,3-butadiene, 1,3-pentadiene, 1,3-hexadiene, 3-butyl-1,3-octadiene, 2-phenyl-1,3-butadiene or mixtures thereof. 1,3-Butadiene or isoprene are particularly preferred.

Polar comonomers that can be optionally used can be selected, for example, from: vinylpyridine, vinylquinoline, acrylic acid and alkylacrylic acid esters, nitriles or mixtures thereof such as methyl acrylate, ethyl acrylate, methyl metacrylate, ethyl metacrylate, acrylonitrile or mixtures thereof.

Preferably, the synthetic or natural elastomer included in the elastomeric material can be for example selected from: cis-1,4-polyisoprene (natural or synthetic rubber, preferably natural rubber), 3,4-polyisoprene, polybutadiene (in particular polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers or mixtures thereof.

Advantageously, in order to improved adhesion of said hybrid fibres to the cross-linkable elastomeric material, the hybrid filaments can be surface treated by immersion into a bath in which there is a solution containing a mixture of resorcinol/formaldehyde sticky latex resin (commonly known as "resorcinol-formaldehyde latex RFL").

The latex used can be for example selected from: vinylpyridine/styrene-butadiene (VP/SBR), styrenebutadiene (SBR), latex of isoprene rubber (NR), carboxylic hydrogenated butadiene-acrylonitrile (X-HNBR), hydrogenated acrylonitrile butadiene (HNBR), acrylonitrile butadiene (NBR), ethylenepropylene-diene monomer (EPDM), chloro sulfonyl polyethylene (CSM), alone or mixtures of same.

Each hybrid textile cord 11 comprises at least one yarn of aliphatic polyamide fibre 14 and at least one yarn of cellulose fibre 15.

The aliphatic polyamide is preferably nylon 6, nylon 66, nylon 46 and most preferably nylon 66.

The cellulose fibre is rayon or lyocell, preferably rayon.

Each hybrid textile cord 11 comprises at least one nylon yarn 14 and at least one rayon yarn 15 twisted together, wherein each of the yarns is formed with a bundle of filaments twisted together. The cord shown in Fig. 4 comprises a single nylon yarn 14 and a single rayon yarn 15.

The hybrid textile cords made up of rayon or nylon are identified by the yarn count of each fibre expressed in dtex, the number of twists upon itself imparted to each yarn and the twists imparted to the cord after assembling of the yarns, expressed in twists per meter (tpm).

### For example:

Ry/Ny 1840/1400 (280/70)x280 identifies a cord formed with a rayon yarn the count of which is 1840 dtex, twisted upon itself with 280 tpm, and a nylon yarn the count of which is 1400 dtex, twisted upon itself at 70 tpm, that are twisted together to form a cord with 280 tpm.

Ry/Ry/Ny 1220/1220/940 (320/320/150)x320 identifies a cord formed with two rayon yarns the count of which is 1220 dtex, twisted upon itself with 320 tpm, and a nylon yarn the count if which is 940 dtex, twisted upon itself at 150 tpm, all the three yarns being twisted together to form a cord with 320 tpm.

Preferably, the counts used for making the cords of the invention are:
- 2160 dtex in the form of Ry/Ny 1220/940 dtex
- 2620 dtex in the form of Ry/Ny 1220/1400 dtex
- 2780 dtex in the form of Ry/Ny 1840/940 dtex
- 3240 dtex in the form of Ry/Ny 1840/1400 dtex
- 3840 dtex in the form of Ry/Ny 2440/1400 dtex
- 4320 dtex in the form of Ry/Ny 2440/1880 dtex
- 3380 dtex in the form of Ry/Ry/Ny 1220/1220/940 dtex
- 3840 dtex in the form of Ry/Ry/Ny 1220/1220/1400 dtex
- 5080 dtex in the form of Ry/Ry/Ny 1840/1840/1400 dtex
- 5560 dtex in the form of Ry/Ry/Ny 1840/1840/1880 dtex
- 6280 dtex in the form of Ry/Ry/Ny 2440/2440/1400 dtex
- 6760 dtex in the form of Ry/Ry/Ny 2440/2440/1880 dtex
- 4980 dtex in the form of Ry/Ny/Ny 1220/1880/1880 dtex
- 4640 dtex in the form of Ry/Ny/Ny 1840/1400/1400 dtex
- 3720 dtex in the form of Ry/Ny/Ny 1840/940/940 dtex.

Preferably, the thread-like rayon and nylon elements for making the cords can be selected by combining yarns having different counts to form a yarn that is then twisted alone or together with other yarns.

According to this setting, for example, it is possible to make a yarn by combining a 1220 dtex rayon yarn with a 1840 dtex rayon yarn thus obtaining a yarn having a count of 3060 dtex. Or it is possible to make a yarn by combining a 1220 dtex rayon yarn with a 940 dtex nylon yarn thus obtaining a hybrid yarn having a count of 2160 dtex. These yarns, obtained by combining different yarns together, can then be used for making the hybrid cords being the object of the invention.

### TESTS

To verify the humidity effect on the hybrid rayon/nylon cords' behaviour, comparative tensile (load/elongation) tests have been carried out with rayon cords and between rubberised strip-like elements containing reinforcing elements of the two types. The cords used as the reinforcing elements for the tests were: rayon cords (1840/2 48x48) and hybrid rayon/nylon 6.6 cords (RyNy 1840/1400 320/70 x 320).

### Example 1

The rayon cords and hybrid rayon/nylon cords fully dried were conditioned by exposure to standard room conditions (temperature 20°C - relative humidity 65% for 24 hours).

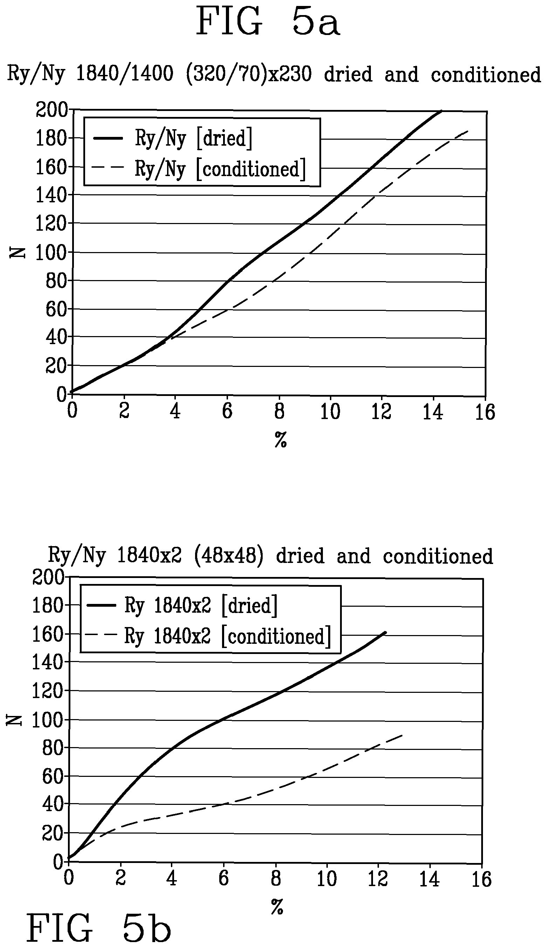

The tensile properties (tensile force N/elongation %) were measured for dried and conditioned cords, with the results reproduced in the graphs in Figs 5a and 5b.

It should be appreciated that in hybrid cords having a rayon content close to 60% (Fig. 5a) until about 4% of elongation, the negative effect of humidity on the modulus of elasticity practically could not be detected, while the cords made of 100% rayon showed a drastic drop in the modulus between dry and wet conditions even at very low deformations (Fig. 5b).

### Example 2

A comparative evaluation test on the tensile (load/elongation) properties was carried out between a strip-like element rubberised and conditioned in standard room conditions (temperature 20°C - relative humidity 65% for 24 hours) and containing the aforesaid cords, and the ideal curves obtained by summing up the effects of the same number of dried and conditioned cords (n=10) incorporated in the rubberised strip-like element.

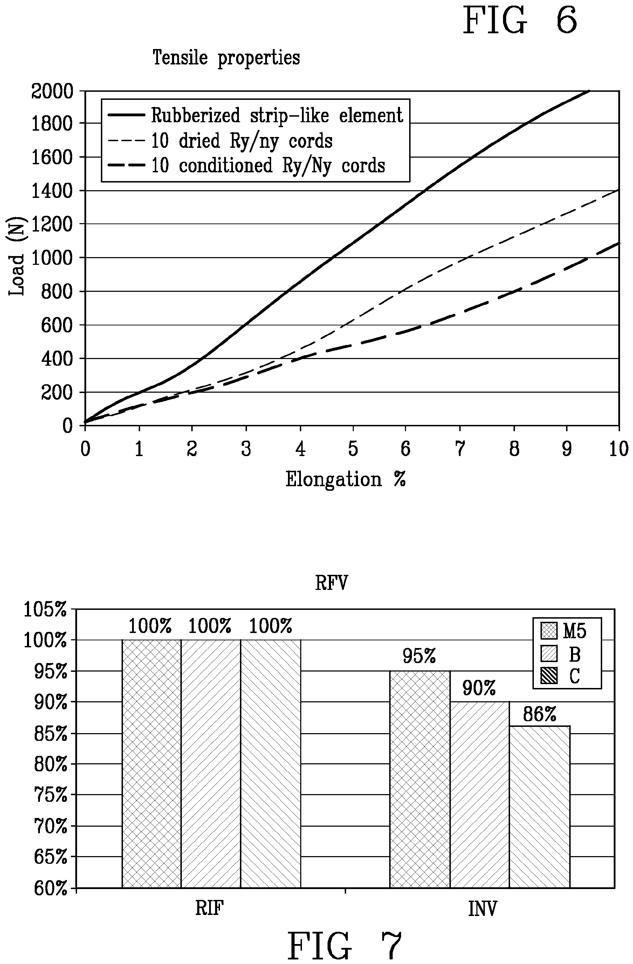

Reproduced in Fig. 6 is the respective elongation/load graph; it is possible to see that the curve of the strip-like element reinforced with hybrid rayon/nylon, with a 57% rayon content, does not only seems to be translated to the left due to the greater stiffness given by the combination between the elastomeric portion and the cords in the rubberised strip-like element, but also seems to have a course more similar to that of the dried cords than the course of the conditioned cords, which confirms the weak critical state of the exposure to humidity also with a high rayon content in the hybrid product.

Measurement of the flat spotting phenomenon was carried out as hereinafter explained.

Two tyres 275/55R20 were manufactured, one provided with belt with reinforcing layer containing cords of nylon 66 (Ny1401 S/2) (RIF) and one provided with belt with reinforcing layer containing cords of Ry/Ny66 (Ry 1840/Ny 1400(320/70)x230 S/2).

The tyres were mounted on the respective rims and inflated to a pressure of 220 kPa.

The wheels thus made were submitted to a comparative test for measurement of the flat spotting phenomenon so as to evaluate the effect of parking on the vehicle tyre.

This test contemplates defined load conditions, sizes of the rim, temperature and pressure for each tyre measurement, in compliance with the "ETRTO STANDARDS MANUAL" and "F360 109 Reifen - Flat Spot Verhalten" regulations.

A drum or roller test bench of 1.7 m diameter was used, on which the uniformity of the casing was measured through the Radial Force Variation (in the following RFV), i.e. the variation of radial force directed upwards that is detected during rotation of the wheel under load.

The measurement was carried out for detecting the RFV (N) with the wheel rolling at 20 km/h and 105 km/h, both under cold conditions and under heating after a first heating of the tyre obtained at 150 km/h. Measurement of the RFV under heating at 20 km/h represents the first result (A).

After a second heating of the casing, the casing was left stationary, pressed during one hour at a controlled load in the point of minimum radial force. The RFV was measured again at 20 km/h (initial peak M5), then the drum was brought to the speed of 105 km/h making the wheel run over 26 km.

Then the RFV was measured every two kilometres and the integral (B) (N x km) of the RFV was calculated between the 4th and the 24th kilometre, clearing it of the offset value of the RFV under heating at 105 km/h. Finally, the RFV (N) at 20 km/h was measured again (C). The significant results of the comparative test were reproduced in Fig. 7 and expressed as initial peak M5, B and (C-A) respectively indicating: initial peak M5, the value of the RFV at low speed immediately after parking under load, (B) the (integral) sum of the "flat spotting fault" cleared of the offset on the first kilometres after deflection, travelled over at high speed, (C-A) the final value (C) of unevenness at low speed that, compared with (A), enables the residual fault to be evaluated (or recovery of the initial conditions).

As can be viewed from the diagram in Fig. 7 in which the values detected for the reference tyre (REF) were put to 100, the tyre according to the invention has shown a lower flat spotting and a lower residual fault (i.e. more marked recovery) than the reference tyre.

In a motor racing circuit, comparison tests were carried out between tyres 255/65R16 in terms of behaviour on dry surfaces, and comparison tests in terms of behaviour on wet surfaces between tyres 275/55R20 made for SUVs mainly dedicated to use on the road and provided with identical carcass structure.

Then two series of four tyres 255/65R16 were manufactured for equipping a four wheel drive Toyota Hi-Lux 3.0 for the test on a dry surface and two series of four tyres 275/55R20 for equipping a Ford F150.

In both cases it was made:
- a first series of four reference tyres (RIF), provided with belt with reinforcing layer having cords of nylon 66 (Ny1401 S/2);
- a second series of tyres according to the present invention (INV), provided with belt with reinforcing layer having cords of Ry/Ny66 (Ry 1840/Ny1400(320/70)x230 S/2).

The tyres were mounted on respective rims and inflated to a pressure of 200 kPa (255/65R16) and about 240 kPa (275/55R20), respectively.

For the purpose of evaluating the tyre behaviour, the test driver simulated some characteristic manoeuvres (for instance: running on a straight stretch, change of lane, taking a bend, exit from a bend). The test driver evaluated the tyre behaviour and assigned a score as a function of the tyre performance during said manoeuvring.

On a dry roadway surface manoeuvring was organised according to different entries (running on a straight stretch, moderate use, use under hard conditions) depending on the manoeuvring type carried out by the test driver. The moderate use refers to use of the tyre under normal drive conditions, i.e. normal speed and good transverse grip. On the contrary, tests of use under hard conditions describe behaviour of the tyre to the grip limit, i.e. under hard handling conditions. In the last-mentioned case, the test driver carries out manoeuvres that a medium-ability driver could be forced to execute in case of unforeseen and dangerous circumstances: sudden steering at high speed, sudden change of lane to avoid obstacles, sudden braking and the like.

As to tests of use under moderate conditions, the test driver evaluated: void in the middle, i.e. the vehicle's delay and response degree at small steering angles; quickness of response to steering on negotiating a bend; progressiveness of response to steering during a bend; centring on a bend, i.e. the tyre ability to maintain the vehicle on a bend with a constant radius without continuous steering corrections.

As to the tests of use under hard conditions, the test driver evaluated: quickness in negotiating a bend, i.e. the behaviour of the tyre on negotiating a bend taken at the limit speed; balancing, i.e. the oversteering or understeering degree of the vehicle; release on a bend, i.e. the tyre ability to attenuate the instability effects resulting from sudden release of the accelerator during a bend taken at the limit speed; control ability, i.e. the tyre ability to keep the trajectory and/or bring the vehicle back to the trajectory after loss of grip, roadholding.

It was also evaluated the comfort through: softness, i.e. how much the vehicle is generally perceived to be stiff during the drive, impact behaviour on a single obstacle; damping upon impact on a single obstacle.

As to behaviour on a wet roadway surface, it was evaluated acceleration and braking on a straight stretch, response on a bend, balancing.

Table 1 summarises the sheet of the evaluation scores assigned to the tyres by the test driver. The results of these tests are expressed by an evaluation scale representing the subjective opinion of the test driver expressed by a store system. The values reproduced in the following table represent an average value among those obtained in different test sessions. It should be recognised that the scale of values goes from a minimum of 4 to a maximum of 9.

**TABLE 1**

| EVALUATIONS | | | |
|---|---|---|---|
| USE/TEST | MANOEUVRING | RIF | INV |
| BEHAVIOUR ON DRY ROADWAY SURFACE | | | |
| Run on straight stretch | Centring | 7.0 | 7.5 |
| | Void in the middle | 6.0 | 6.5 |
| | Quick response in steering | 6.5 | 7.0 |
| Normal behaviour (moderate use) | Progressive response in steering | 6.0 | 6.5 |
| | Centring on a bend | 6.5 | 7.0 |
| | Change of lane | 6.0 | 6.5 |
| | Quickness in negotiating a bend | 6.5 | 7.0 |
| | Balancing in understeering | 7.0 | 7.0 |
| Behaviour to the limit (use under hard conditions) | Balancing in oversteering | 6.5 | 7.0 |
| | Release on a bend | 6.5 | 6.5 |
| | Control ability | 6.5 | 7.0 |
| | Roadholding | 6.5 | 7.0 |
| **Average behaviour on dry roadway surface** | | **6.46** | **6.88** |
| | Softness | 7.0 | 7.5 |
| Comfort | Single obstacle (impact) | 7.5 | 7.5 |
| | Single obstacle (damping) | 7.0 | 7.0 |
| **Average comfort** | | **7.16** | **7.33** |

| BEHAVIOUR ON WET ROADWAY SURFACE | | | |
|---|---|---|---|
| | Run on straight stretch Traction control | 7.25 | 7.25 |
| | Run on straight stretch Braking | 7 | 7 |
| | Negotiating a bend | 7 | 7.25 |
| | Balancing in understeering | 7 | 7.25 |
| | Balancing in oversteering | 7 | 7.25 |
| Behaviour to the limit (use under hard conditions) | Stability on a bend | 7 | 7.25 |
| | Lateral roadholding | 7 | 7 |
| | Traction control on a bend | 7 | 7 |
| | Braking on a bend | 7 | 7.25 |
| | Grip loss speed | 7 | 7.25 |
| | Grip recovery | 7 | 7.25 |
| | Control ability | 7 | 7.25 |
| | Aquaplane | 7 | 7 |
| **Average behaviour on wet roadway surface** | | 7.02 | 7.17 |

The tyres according to the invention (INV) have been considered to be better substantially in all test conditions. On a dry roadway surface, in particular the steering response has been more linear, stiffness and void in the middle have been considered better, the change of lane more susceptible of control as compared with tyres (RIF). On a wet roadway surface the hard use conditions have allowed the best behaviour of the tyre of the invention (INV) to be ascertained relative to the reference tyre (REF) through a softer drive, better control ability on a bend and handling in general, making driving easier.

## Claims

1. A method of increasing performance and comfort in a tyre for vehicle wheels, said method comprising:
- assembling a belt structure (6) including at least one radially external reinforcing layer (10) comprising a plurality of cords (11) disposed at a substantially zero angle relative to a circumferential extension direction of the tyre (1);
wherein each of said cords comprises cellulose fibres and aliphatic polyamide fibres and wherein at least one cord (11) included in a 0° reinforcing layer comprises at least one yarn of aliphatic polyamide fibre (14) and at least one yarn of cellulose fibre (15) twisted together.

2. A method as claimed in claim 1, wherein the radially external reinforcing layer (10) is assembled through winding up of a continuous elongated element (12) comprising at least one continuous hybrid cord (11), into a plurality of turns.

3. A method as claimed in the preceding claim, wherein the turns are disposed in axial side by side relationship.

4. A method as claimed in claim 2, wherein the turns partly overlap each other in an axial direction.

5. A method as claimed in claim 2, wherein said continuous elongated element (12) comprises a plurality of continuous parallel hybrid cords (11) disposed in side by side relationship.

6. A method as claimed in claim 2, wherein said continuous elongated element (12) comprises a number included between 5 and 15 of continuous parallel hybrid cords (11) disposed in side by side relationship with, or adjacent to other textile cords.

7. A method as claimed in anyone of the preceding claims, wherein the starting modulus evaluated through the load at a specific 1% elongation of the cellulose fibres and the aliphatic polyamide fibres is lower than 20 [cN/tex].

8. A method as claimed in anyone of the preceding claims, wherein the normalised ultimate tensile stress on the count of the cellulose fibres and the aliphatic polyamide fibres is lower than 100 [cN/tex].

9. A tyre for vehicle wheels, comprising:
- a carcass structure (2), a belt structure (6) applied at a radially external position to the carcass structure (2), a tread band (7) applied at a radially external position to said belt structure (6);
wherein the belt structure (6) comprises at least one radially external reinforcing layer (10) including a plurality of cords (11) disposed at a substantially zero angle relative to a circumferential extension direction of the tyre (1);
wherein each of said cords (11) comprises cellulose fibres and aliphatic polyamide fibres, wherein at least one cord (11) included in a 0° reinforcing layer comprises at least one yarn of aliphatic polyamide fibre (14) and at least one yarn of cellulose fibre (15) twisted together.

10. A tyre as claimed in claim 9, wherein each of the cellulose-fibre yarns (15) has a count included between about 1000 dtex and about 2800 dtex.

11. A tyre as claimed in claim 9, wherein each of said hybrid cords (11) has a count included between about 1200 dtex and about 7000 dtex.

12. A tyre as claimed in claim 9, wherein the twisting imparted to each of the cellulose fibre yarns (15) is included between about 150 twists/m and about 600 twists/m.

13. A tyre as claimed in claim 9, wherein the twisting imparted to each of the hybrid cords (11) is included between about 100 twists/m and about 500 twists/m.

14. A tyre as claimed in claim 9, wherein the yarn of aliphatic polyamide fibre (14) is nylon.

15. A tyre as claimed in claim 9, wherein the cellulose fibre yarn (15) is rayon.

16. A tyre as claimed in claim 9, wherein each of said hybrid cords (11) comprises two nylon yarns (14) and one rayon yarn (15).

17. A tyre as claimed in claim 9, wherein each of said hybrid cords (11) comprises one nylon yarn (14) and two rayon yarns (15).

18. A tyre as claimed in claim 9, wherein the hybrid cords (11) of the radially external reinforcing layer (10) have a density included between about 50 cords/dm and about 130 cords/dm.

19. A tyre as claimed in claim 9, wherein the aliphatic polyamide is selected from the group comprising: nylon 6, nylon 66, nylon 46.

20. A tyre as claimed in claim 9, wherein the rayon content in the hybrid cord is lower than 80%.

21. A tyre as claimed in claim 20, wherein the rayon content in the hybrid cord is included between about 25% and about 75%.

22. A tyre as claimed in anyone of claims 9 to 21, wherein the belt structure (6) comprises at least one radially internal layer (6a, 6b) including a plurality of reinforcing cords disposed in a crossed orientation relative to the circumferential extension direction of the tyre (1).

23. A tyre as claimed in anyone of claims 9 to 22, wherein said tyre (1) is a HP (High Performance) tyre or a UHP (Ultra High Performance) tyre capable of withstanding maximum speeds of at least 190 km/h, until 270 km/h, for either a SUV (Sport Utility Vehicle) or a CUV (Crossover Utility Vehicle).

## Patentansprüche

1. Verfahren zur Erhöhung der Leistung und des Komforts für einen Reifen für Fahrzeugräder, wobei das Verfahren umfasst:
- Zusammenbauen einer Gürtelstruktur (6), die zumindest eine radial äußere Verstärkungsschicht (10) mit einer Vielzahl von Korden (11) umfasst, die in einem Winkel von im Wesentlichen Null zu einer Umfangserstreckungsrichtung des Reifens (1) angeordnet sind;
wobei jeder der Korde Zellulosefasern und aliphatische Polyamidfasern umfasst, und wobei zumindest ein Kord (11), der in einer 0°-Verstärkungsschicht enthalten ist, zumindest ein Garn aus aliphatischen Polyamidfasern (14) und zumindest ein Garn aus Zellulosefasern (15) umfasst, die miteinander verdrillt sind.

2. Verfahren nach Anspruch 1, wobei die radial äußere Verstärkungsschicht (10) durch Aufwickeln eines durchgehenden länglichen Elements (12), das zumindest einen durchgehenden Hybridkord (11) umfasst, in eine Vielzahl von Wicklungen zusammengebaut wird.

3. Verfahren nach dem vorhergehenden Anspruch, wobei die Wicklungen in einer axial Seite an Seite liegenden Beziehung angeordnet sind.

4. Verfahren nach Anspruch 2, wobei die Windungen sich in einer axialen Richtung teilweise überlappen.

5. Verfahren nach Anspruch 2, wobei das durchgehende längliche Element (12) eine Vielzahl von durchgehenden parallelen Hybridkorden (11) umfasst, die in einer Beziehung Seite an Seite angeordnet sind.

6. Verfahren nach Anspruch 2, wobei das durchgehende längliche Element (12) eine Anzahl zwischen 5 und 15 durchgehenden parallelen Hybridkorden (11) umfasst, die in einer Beziehung Seite an Seite oder benachbart zu anderen Textilkorden angeordnet sind.

7. Verfahren nach einem der vorhergehenden Ansprüche, wobei der anfängliche Modul, der durch die Spannung bei einer spezifischen Dehnung der Zellulosefasern und der aliphatischen Polyamidfasern von 1 % evaluiert wird, niedriger als 20 [cN/tex] ist.

8. Verfahren nach einem der vorhergehenden Ansprüche, wobei die normalisierte Zugfestigkeit für die Zellulosefaser- und die aliphatische Polyamidfaserzahl niedriger als 100 [cN/tex] ist.

9. Reifen für Fahrzeugräder, der umfasst:
- eine Karkassenstruktur (2), eine Gürtelstruktur (6), die in Bezug auf die Karkassenstruktur (2) in einer radial äußeren Position angelegt ist, einen Laufflächenring (7), der in Bezug auf die Gürtelstruktur (6) in einer radial äußeren Position angelegt ist;
wobei die Gürtelstruktur (6) zumindest eine radial äußere Verstärkungsschicht (10) umfassend eine Vielzahl von Korden (11) umfasst, die in einem Winkel von im Wesentlichen Null zu einer Umfangserstreckungsrichtung des Reifens (1) angeordnet sind;
wobei jeder der Korde (11) Zellulosefasern und aliphatische Polyamidfasern umfasst, und wobei zumindest ein Kord (11), der in einer 0°-Verstärkungsschicht enthalten ist, zumindest ein Garn aus aliphatischen Polyamidfasern (14) und zumindest ein Garn aus Zellulosefasern (15) umfasst, die miteinander verdrillt sind.

10. Reifen nach Anspruch 9, wobei jedes der Zellulosefasergarne (15) eine Faserzahl aufweist, die zwischen etwa 1000 dtex und etwa 2800 dtex liegt.

11. Reifen nach Anspruch 9, wobei jedes der Hybridkorde (11) eine Faserzahl aufweist, die zwischen etwa 1200 dtex und etwa 7000 dtex liegt.

12. Reifen nach Anspruch 9, wobei die Verdrillung, die auf jedes der Zellulosefasergarne (15) angewendet wird, zwischen etwa 150 Windungen/m und etwa 600 Windungen/m liegt.

13. Reifen nach Anspruch 9, wobei die Verdrillung, die auf jeden der Hybridkorde (11) angewendet wird, zwischen etwa 100 Windungen/m und etwa 500 Windungen/m liegt.

14. Reifen nach Anspruch 9, wobei das Garn aus aliphatischer Polyamidfaser (14) Nylon ist.

15. Reifen nach Anspruch 9, wobei das Zellulosefasergarn (15) Rayon ist.

16. Reifen nach Anspruch 9, wobei jeder der Hybridkorde (11) zwei Nylongarne (14) und ein Rayongarn (15) umfasst.

17. Reifen nach Anspruch 9, wobei jeder der Hybridkorde (11) ein Nylongarn (14) und zwei Rayongarne (15) umfasst.

18. Reifen nach Anspruch 9, wobei die Hybridkorde (11) der radial äußeren Verstärkungsschicht (10) eine Dichte aufweisen, die zwischen etwa 50 Drähten/dm und etwa 130 Korden/dm liegt.

19. Reifen nach Anspruch 9, wobei das aliphatische Polyamid ausgewählt ist aus der Gruppe umfassend: Nylon 6, Nylon 66, Nylon 46.

20. Reifen nach Anspruch 9, wobei der Rayongehalt in dem Hybridkord weniger als 80 % beträgt.

21. Reifen nach Anspruch 20, wobei der Rayongehalt in dem Hybridkord zwischen etwa 25 % und etwa 75 % liegt.

22. Reifen nach einem der Ansprüche 9 bis 21, wobei die Gürtelstruktur (6) zumindest eine radial innere Lage (6a, 6b) mit einer Vielzahl von Verstärkungskorden umfasst, die in einer überkreuzten Orientierung relativ zu der Umfangserstreckungsrichtung des Reifens (1) angeordnet sind.

23. Reifen nach einem der Ansprüche 9 bis 22, wobei der Reifen (1) ein HP- oder High-Performance-Reifen, oder ein UHP- oder Ultra-High-Performance-Reifen ist, der in der Lage ist, Höchstgeschwindigkeiten von zumindest 190 km/h bis 270 km/h standzuhalten, für ein Fahrzeug vom Typ SUV (Sport Utility Vehicle) oder CUV (Crossover Utility Vehicle).

## Revendications

1. Procédé pour augmenter la performance et le confort dans un pneu pour roues de véhicule, ledit procédé comprenant le fait :
- d'assembler une structure de ceinture (6) comportant au moins une couche de renforcement radialement externe (10) comprenant une pluralité de câblés (11) disposés à un angle essentiellement nul par rapport à une direction d'extension circonférentielle du pneu (1) ;
dans lequel chacun desdits câblés comprend des fibres cellulosiques et des fibres de polyamide aliphatique et
dans lequel au moins un câblé (11) inclus dans une couche de renforcement à 0° comprend au moins un fil de fibre de polyamide aliphatique (14) et au moins un fil de fibre cellulosique (15) torsadés ensemble.

2. Procédé tel que revendiqué dans la revendication 1, dans lequel la couche de renforcement radialement externe (10) est assemblée par enroulement d'un élément allongé continu (12) comprenant au moins un câblé hybride continu (11) en une pluralité de spires.

3. Procédé tel que revendiqué dans la revendication précédente, dans lequel les spires sont disposées côte à côte de manière axiale.

4. Procédé tel que revendiqué dans la revendication 2, dans lequel les spires se chevauchent partiellement dans une direction axiale.

5. Procédé tel que revendiqué dans la revendication 2, dans lequel ledit élément allongé continu (12) comprend une pluralité de câblés hybrides parallèles continus (11) disposés côte à côte.

6. Procédé tel que revendiqué dans la revendication 2, dans lequel ledit élément allongé continu (12) comprend un nombre compris entre 5 et 15 de câblés hybrides parallèles continus (11) disposés côte à côte avec ou de manière adjacente à d'autres câblés textiles.

7. Procédé tel que revendiqué dans l'une quelconque des revendications précédentes, dans lequel le module de départ évalué par la charge à un allongement spécifique de 1% des fibres cellulosiques et des fibres de polyamide aliphatique est inférieur à 20 [cN/tex].

8. Procédé tel que revendiqué dans l'une quelconque des revendications précédentes, dans lequel la résistance ultime à la traction normalisée sur le total des fibres cellulosiques et des fibres de polyamide aliphatique est inférieure à 100 [cN/tex].

9. Pneu pour roues de véhicule, comprenant :
- une structure de carcasse (2), une structure de ceinture (6) appliquée à une position radialement externe à la structure de carcasse (2), une bande de roulement (7) appliquée à une position radialement externe à ladite structure de ceinture (6) ;
dans lequel la structure de ceinture (6) comprend au moins une couche de renforcement radialement externe (10) comportant une pluralité de câblés (11) disposés à un angle essentiellement nul par rapport à une direction d'extension circonférentielle du pneu (1) ;
dans lequel chacun desdits câblés (11) comprend des fibres cellulosiques et des fibres de polyamide aliphatique, où au moins un câblé (11) inclus dans une couche de renforcement à 0° comprend au moins un fil de fibre de polyamide aliphatique (14) et au moins un fil de fibre cellulosique (15) torsadés ensemble.

10. Pneu tel que revendiqué dans la revendication 9, dans lequel chacun des fils de fibre cellulosique (15) a un total compris entre environ 1000 dtex et environ 2800 dtex.

11. Pneu tel que revendiqué dans la revendication 9, dans lequel chacun desdits câblés hybrides (11) a un total compris entre environ 1200 dtex et environ 7000 dtex.

12. Pneu tel que revendiqué dans la revendication 9, dans lequel la torsion conférée à chacun des fils de fibre cellulosique (15) est comprise entre environ 150 torsions/m et environ 600 torsions/m.

13. Pneu tel que revendiqué dans la revendication 9, dans lequel la torsion conférée à chacun des câblés hybrides (11) est comprise entre environ 100 torsions/m et environ 500 torsions/m.

14. Pneu tel que revendiqué dans la revendication 9, dans lequel le fil de fibre de polyamide aliphatique (14) est du nylon.

15. Pneu tel que revendiqué dans la revendication 9, dans lequel le fil de fibre cellulosique (15) est la rayonne.

16. Pneu tel que revendiqué dans la revendication 9, dans lequel chacun desdits câblés hybrides (11) comprend deux fils de nylon (14) et un fil de rayonne (15).

17. Pneu tel que revendiqué dans la revendication 9, dans lequel chacun desdits câblés hybrides (11) comprend un fil de nylon (14) et deux fils de rayonne (15).

18. Pneu tel que revendiqué dans la revendication 9, dans lequel les câblés hybrides (11) de la couche de renforcement radialement externe (10) ont une densité comprise entre environ 50 câblés/dm et environ 130 câblés/dm.

19. Pneu tel que revendiqué dans la revendication 9, dans lequel le polyamide aliphatique est choisi dans le groupe comprenant : le nylon 6, le nylon 66, le nylon 46.

20. Pneu tel que revendiqué dans la revendication 9, dans lequel la teneur en rayonne dans le câblé hybride est inférieure à 80%.

21. Pneu tel que revendiqué dans la revendication 20, dans lequel la teneur en rayonne dans le câblé hybride est comprise entre environ 25% et environ 75%.

22. Pneu tel que revendiqué dans l'une quelconque des revendications 9 à 21, dans lequel la structure de ceinture (6) comprend au moins une couche radialement interne (6a, 6b) comportant une pluralité de câblés de renforcement disposés selon une orientation croisée par rapport à la direction d'extension circonférentielle du pneu (1).

23. Pneu tel que revendiqué dans l'une quelconque des revendications 9 à 22, dans lequel ledit pneu (1) est un pneu HP (Haute Performance) ou un pneu UHP (Très Haute Performance) capable de résister à des vitesses maximales d'au moins 190 km/h, jusqu'à 270 km/h, soit pour un SUV (Véhicule Utilitaire Sport) ou un CUV (Véhicule Utilitaire Multisegment).
